# FASCICULE DE BREVET EUROPEEN

(11) **EP 0 631 930 B1**
(45) Date de publication et mention de la délivrance du brevet: **27.11.1996**
(21) Numéro de dépôt: 94401484.4
(22) Date de dépôt: 30.06.1994
(51) Int. Cl.: B64F 1/12

(54) **Adaptateur pour système d'assistance à l'atterrissage et au décollage d'hélicoptère**
Anpassstück einer Abflugs und Landungs-Hilfeanlage eines Hubschraubers
Adaptor for a take off and landing aid system for helicopters

(30) Priorité: 01.07.1993 FR 9308045
(43) Date de publication de la demande: 04.01.1995
(73) Titulaire: ETAT-FRANCAIS représenté par le DELEGUE GENERAL POUR L'ARMEMENT (DPAG), F-00460 Paris Armées (FR)
(72) Inventeur: Amiand, Vincent, F-16000 Angoulème (FR); Le Blanc, Francis, F-16600 Ruelle (FR)

(56) Documents cités:
- WO-A-90/13480
- NL-A- 8 900 653

## Description

La présente invention concerne des systèmes d'assistance pour aéronefs tels qu'hélicoptères, qu'il est connu d'utiliser pour faciliter l'appontage, le décollage, le stationnement et les déplacements à bord de navires. Plus particulièrement, l'invention concerne un dispositif permettant d'utiliser indifféremment deux systèmes de conceptions très différentes.

L'un de ces deux systèmes, d'origine canadienne, est connu sous l'appellation de système "RAST" (Recovery Assist Securing Traversing). A bord de l'hélicoptère, ses moyens sont pour l'essentiel un câble léger dit câble messager commandé au moyen d'un treuil, et un cylindre creux télescopique dénommé "probe" faisant saillie sous le fuselage, légèrement en arrière des roues principales, par lequel passe ledit câble. Au sol, ou plus précisément sur le navire, l'aire d'appontage est équipée d'un câble nettement plus fort que le câble messager, dit câble "RA", enroulé et déroulé à partir d'un treuil sous le pont. Le câble "RA" passe à travers un chariot mobile le long d'une piste sur le pont, lequel chariot comporte des moyens d'assujettissement de l'extrémité inférieure du cylindre télescopique ou "probe" sous l'hélicoptère. La piste réunit l'aire d'appontage aux hangars de stationnement.

Le principe de fonctionnement de ce système est le suivant : avant appontage sur le pont du navire, de l'hélicoptère en vol stationnaire à quelques mètres au-dessus du pont, le câble messager est descendu pour que son extrémité soit réceptionnée par le personnel de pont qui y connecte l'extrémité du câble "RA". Le câble "RA" est hissé et son extrémité est verrouillée dans le cylindre creux ou "probe".

L'appontage de l'hélicoptère est effectué par traction du câble "RA" enroulé sur son treuil. Lorsque la tête du cylindre creux est engagée dans le chariot, elle y est verrouillée, immobilisant ainsi l'hélicoptère.

Dans un autre système, les moyens sur le pont consistent en une grille définissant des alvéoles à fond ouvert délimitées par des ponts ou isthmes. L'hélicoptère est équipé d'un harpon dont l'extrémité comporte une tête pour l'ancrage dans la grille.

Bien entendu, ces deux systèmes sont incompatibles, en ce sens qu'un hélicoptère sans harpon mais avec un cylindre "RAST" ne peut utiliser un équipement à grille, et vice-versa. D'autre part, il n'est pas réaliste de prévoir un double équipement à bord des hélicoptères et des navires.

Le brevet NL-8 900 653 décrit un dispositif d'atterrissage pour l'ancrage d'un hélicoptère sur le pont d'envol d'un navire. Ce dispositif, qui combine les caractéristiques du système "RAST" et du système comportant une grille d'ancrage, comprend également des moyens de verrouillage entre l'élément d'atterrissage (muni d'une pince) et l'organe cylindrique ("PROBE"). Ces moyens sont constitués par des crochets agissant à l'intérieur du "PROBE" et situés dans sa partie supérieure. Ce dispositif maintient l'hélicoptère à la grille par la seule force de tenue de ces crochets, dont la capacité de tenue verticale avoisine 3 000 daN. Un tel système présente donc l'inconvénient d'offrir une résistance moindre pour des hélicoptères plus lourds, c'est-à-dire nécessitant une tenue verticale supérieure (de l'ordre de 10 000 daN par exemple).

Dans ce contexte, l'invention a eu pour objet la conception des moyens d'interface permettant à des hélicoptères équipés du système "RAST" d'utiliser indifféremment ce système ou un système à grille, ces moyens d'interface présentant une résistance mécanique accrue.

Un autre objectif a été de concevoir ces moyens d'interface en s'interdisant de modifier en quoi que ce soit l'équipement "RAST".

L'invention est donc un dispositif adaptateur pour hélicoptère équipé avec le système "RAST", lui permettant d'utiliser au sol un système à grille,
le système "RAST" comportant à bord de l'hélicoptère un cylindre télescopique dit "probe", pourvu intérieurement de crochets de verrouillage de l'extrémité d'un câble "RA" situé au sol, et un câble messager avec, à son extrémité libre, un raccord d'extrémité comportant un boîtier à l'intérieur duquel se trouve une pince munie de deux mors, ledit raccord d'extrémité étant apte à être raccroché à l'extrémité du câble "RA" et
à être descendu et remonté à travers le cylindre,
dispositif comprenant une tête inférieure d'ancrage, apte à s'ancrer automatiquement dans une grille,
un support sous lequel est montée la tête d'ancrage, et
un premier moyen sur le support, connectable au raccord d'extrémité du câble messager, caractérisé en ce qu'il comprend
des crochets sur le support et agissant à l'extérieur du cylindre, pour assujettir automatiquement ce support à l'extrémité inférieure du cylindre lorsqu'il est amené contre elle par l'intermédiaire du câble messager, et des moyens coopérant avec les crochets du cylindre pour verrouiller les crochets du support dans cet état d'assujettissement, dont la libération est commandable à bord de l'hélicoptère,
le dispositif étant prévu pour être présent au sol à proximité de la grille, et transmis à l'hélicoptère et monté automatiquement sous l'extrémité du cylindre au moyen du câble messager.

Dans une forme de réalisation préférée du dispositif adaptateur, la tête d'ancrage dans la grille est d'un type décrit et revendiqué dans la demande de brevet français n° 2 701 689 déposée le 19 février 1993 au nom du présent demandeur et intitulée "têtes de harpon et harpons dotés de ces têtes pour l'arrimage d'hélicoptères sur des plates-formes".

Il s'agit d'une broche cylindrique à extrémité convexe, comportant près de cette extrémité des doigts orientés et mobiles radialement entre une position escamotée à l'intérieur de la broche et une position sortie,
des moyens pour entraîner et retenir en position sortie les doigts, ces moyens agissant à partir d'un état armé en réponse à la pénétration de la broche dans un alvéole de la grille, après que les doigts sont parvenus sous le niveau du plus petit diamètre de cet alvéole,
et des moyens pour déverrouiller les doigts et réarmer lesdits moyens d'entraînement et de retenue.

Pour fonctionner de façon parfaite, une telle tête a besoin d'une certaine liberté de mouvement lui permettant de s'engager correctement dans la grille. Or le cylindre télescopique ou "probe" du système "RAST" est monté rigidement sous l'hélicoptère, seule son extrémité inférieure ayant une capacité de pivotement très limitée du fait d'être légèrement rotulante. En pratique, cette liberté de mouvement peut ne pas être suffisante pour un fonctionnement parfait et sûr de la tête d'ancrage dans la totalité des cas. C'est pourquoi il a été estimé préférable de prévoir une possibilité de déplacement de la tête par rapport à son support. Plus précisément, la tête est tenue perpendiculairement sous le support. Elle est maintenue centrée sous le support par des moyens à ressort, en ayant la capacité de s'écarter de cette position dans toutes les directions, à l'encontre de ces ressorts. Avantageusement, la liaison entre la tête d'ancrage et son support comporte une double glissière en forme de croix.

Ces caractéristiques et avantages de l'invention, ainsi que d'autres, apparaîtront plus clairement dans la description suivante, faite en relation avec les dessins annexés, dans lesquels :
la Fig. 1 est une vue schématique en perspective d'un cylindre télescopique ou "probe" de l'équipement "RAST",
la Fig. 2 est une vue pour moitié en coupe axiale d'un raccord équipant l'extrémité libre du câble messager de ce même équipement "RAST",
la Fig. 3 est une vue de détail, en demi-coupe axiale, de l'intérieur du cylindre télescopique ou "probe" de la Fig. 1,
les Fig. 4a à 4e sont des schémas qui illustrent le principe général de l'invention,
la Fig. 5 est une vue d'ensemble d'une forme de réalisation préférée de dispositif adaptateur selon l'invention,
la Fig. 6 est une coupe axiale schématique d'un dispositif adaptateur de même type que celui de la Fig. 5,
les Fig. 7 et 8 sont des vues schématiques en coupe axiale de la tête d'ancrage du dispositif adaptateur des Figs. 5 et 6, illustrant respectivement son état au repos et son état lors de l'accrochage dans une grille,
la Fig. 9 est une vue schématique de face d'une pièce commandant la rentrée et la sortie des doigts de la tête d'ancrage,
les Figs. 10a à 10c sont des vues schématiques en coupe axiale illustrant les phases successives de fonctionnement d'une tête semblable à celle des Figs. 6 et 7, et
les Figs. 11a à 11d sont des vues schématiques en coupe axiale illustrant les différentes phases de l'accrochage automatique du dispositif adaptateur au cylindre télescopique de l'équipement "RAST".

Dans l'ensemble des dessins, les mêmes références ont été utilisées pour désigner partout les mêmes éléments.

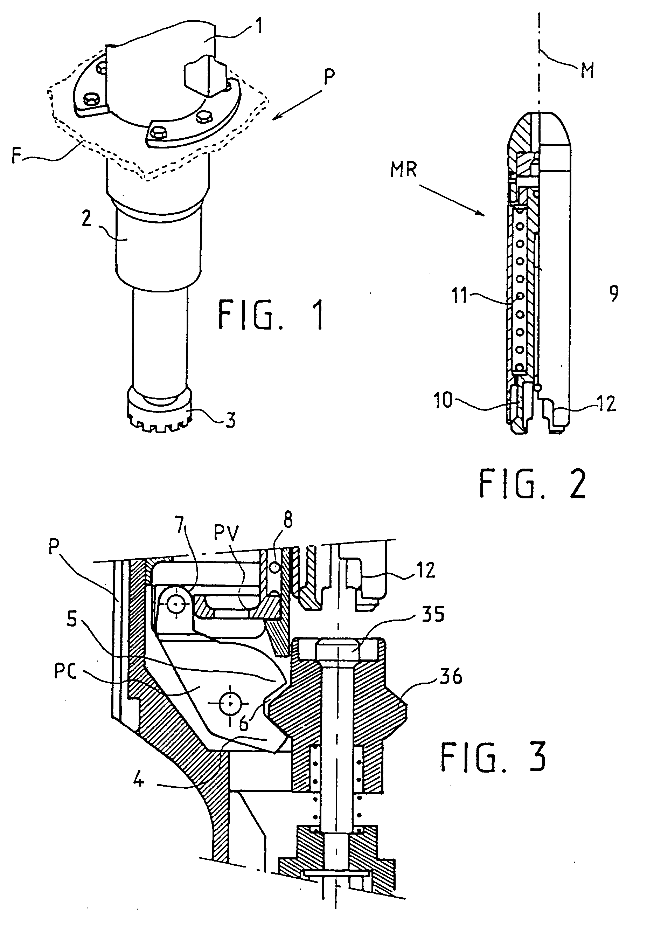

Avant de décrire l'invention proprement dite, il convient de présenter succintement de façon illustrée le système "RAST", et notamment les éléments du système avec lesquels elle est directement liée, qui sont embarqués à bord des hélicoptères. Ce sont une pièce P que les techniciens du domaine désignent par le mot anglais "probe" du fait de sa forme cylindro-conique sous le fuselage, Fig. 1 ; et un câble M dit câble messager, pourvu d'un moyen de raccordement MR à son extrémité libre, Fig. 2.

La pièce P est rigidement fixée au fuselage F par sa partie supérieure 1 qui se trouve à l'intérieur de l'hélicoptère. Sa partie externe ou partie inférieure 2 consiste en un cylindre creux télescopique en deux éléments, l'élément mobile se déployant sous l'action de ressorts et se rétractant au moyen d'un treuil électrique. Son extrémité libre comporte une tête en forme d'anneau 3 qui permet son accrochage dans un chariot non montré faisant partie de l'équipement au sol du système "RAST". La tête 3 forme une articulation à rotule avec l'extrémité inférieure de la partie 2, pour avoir une légère capacité de pivotement autour de l'axe longitudinal de la pièce P dans toutes les directions.

Comme le montre la demi-coupe axiale de la Fig. 3, la pièce P comporte intérieurement, à une certaine distance de son extrémité inférieure, un moyen de verrouillage formé de plusieurs crochets pivotants PC répartis sur la circonférence. Les crochets PC présentent des dents inférieure et supérieure 4 et 5, délimitant un creux 6 évasé en forme de trapèze vers l'ouverture. Leur partie supérieure comporte une chape dans laquelle est monté un galet 7 coopérant avec un verrou PV coulissant dans la direction axiale, et rappelé vers le bas par un ressort 8. Lorsque les crochets PC sont ouverts, leur galet 7 porte sous la face inférieure du verrou PV. A mesure que les crochets PC pivotent dans le sens de la fermeture, le galet 7 roule vers l'extérieur sous le verrou PV, puis échappe sur le côté. Sous l'action du ressort 8, le verrou PV descend alors et bloque les crochets PC en position de verrouillage. Une traction vers le haut sur le verrou PV est nécessaire pour les libérer.

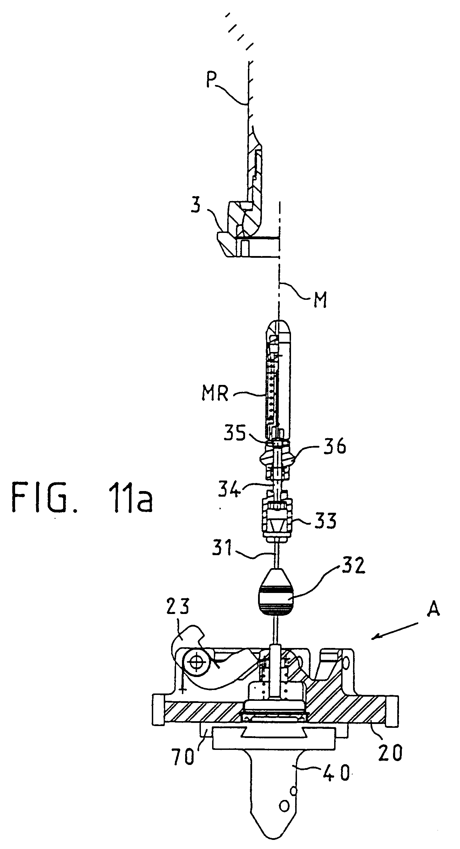

Les crochets PC, rappelés en ouverture par des ressorts, se ferment lors de la progression vers le haut dans la pièce P d'un élément de révolution dont le pourtour, tel que celui de l'anneau repéré 36 à la Fig. 3, a une forme complémentaire des creux 6. Comme l'illustrent les Figs. 11a à 11d, l'élément de révolution 36 rencontre d'abord la dent supérieure 5 des crochets PC, par son intermédiaire entraîne ceux-ci en fermeture, puis se trouve retenu par leur dent inférieure 4 lorsqu'ils sont bloqués par le verrou PV. Lorsque les crochets PC sont libérés, ils s'ouvrent d'eux-mêmes pourvu que ledit élément de révolution ne soit pas retenu vers le haut dans la pièce P.

Le raccord mécanique MR à l'extrémité libre du câble messager M, comporte à l'intérieur d'un boîtier 9 une pince 10 avec deux mâchoires en partie basse pouvant s'écarter et se rapprocher par déformation élastique. La pince a une aptitude de coulissement à l'intérieur du boîtier 9. Elle est rappelée en position rentrée par un ressort 11. On voit que le dos des mors des mâchoires coopère avec l'extrémité inférieure du boîtier, pour assurer la fermeture de la pince lorsqu'elle est rentrée à l'intérieur du boîtier, et lui permettre de s'ouvrir lorsqu'elle en sort suffisamment. La pince est prévue pour retenir un petit bloc circulaire formant un renflement à l'extrémité d'un câble, tel que le renflement repéré 35 à la Fig. 3. Ce renflement est engagé dans la pince par une échancrure 12 dans le bas de la paroi du boîtier 9.

Dans le système "RAST", le renflement est monté à l'extrémité du câble "RA", non montré, faisant partie de l'équipement au sol, au moyen duquel l'hélicoptère est amené sur l'aire d'appontage, la procédure d'atterrisage se déroulant comme suit.

L'hélicoptère se place en vol stationnaire à quelques mètres au-dessus de l'aire d'appontage, la pièce P étant déployée. Le raccord MR se trouvant à l'intérieur de celle-ci est envoyé au sol par déroulement du câble messager M. Un opérateur au sol effectue la connexion entre le renflement à l'extrémité du câble "RA" précité et le raccord MR qui est alors remonté. Le câble "RA" comporte en outre, légèrement écarté du renflement d'extrémité, une pièce similaire à l'élément 36, apte à coopérer avec les crochets PC à l'intérieur de la pièce P. Quand l'extrémité du câble "RA" est par leur intermédiaire accrochée dans la pièce P, le câble messager se déconnecte automatiquement par ouverture de la pince 10 dans le connecteur MR. L'appontage de l'hélicoptère est alors réalisé par traction sur le câble "RA" au moyen d'un treuil se trouvant sous le pont. L'objectif est de contraindre l'hélicoptère à poser sa pièce P à l'intérieur d'un chariot, déjà évoqué précédemment, en attente sur l'aire d'appontage. Lorsque l'hélicoptère s'est posé, le chariot emprisonne la pièce P et immobilise ainsi l'hélicoptère.

Dans le cas où ce même hélicoptère voudrait se poser sur une aire équipée d'une grille d'appontage, les moyens au sol du système "RAST" n'existent pas. C'est là qu'intervient l'invention, sous la forme d'un adaptateur A coopérant avec la pièce P qui est le point fort de l'hélicoptère. Le principe de l'adaptateur A a été conçu de telle manière qu'il ne soit apporté aucune modification dans la structure et le fonctionnement de l'équipement "RAST" à bord de l'hélicoptère, afin que ce dernier, après décollage à partir de la grille, puisse se poser à nouveau sur un bâtiment équipé du système "RAST" sans aucune action supplémentaire de la part du pilote, étrangère à la procédure "RAST".

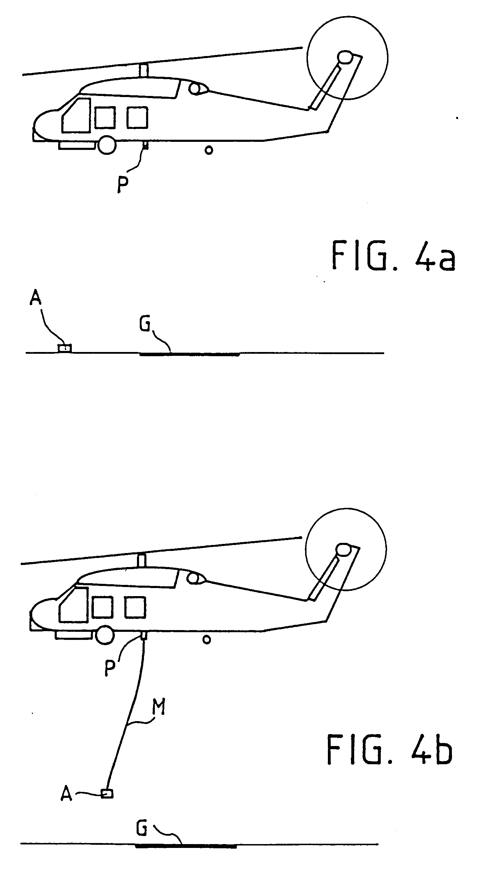

Comme l'illustrent les schémas de principe des Figs. 4a à 4e, l'adaptateur A est destiné à être présent au sol, à proximité d'une grille d'appontage G lorsque un hélicoptère se présente au-dessus de celle-ci. Il comporte essentiellement un moyen supérieur d'assujettissement automatique à l'extrémité de la pièce P, et une tête inférieure capable de s'ancrer automatiquement dans la grille d'appontage. En règle générale, un fonctionnement parfait de cette dernière nécessite qu'elle dispose d'une certaine liberté de mouvement pour pénétrer correctement dans un trou de la grille. Comme la pièce P est montée rigidement sur l'hélicoptère, et que son axe ne se situe qu'exceptionnellement au droit d'un trou de la grille lors d'un appontage, cette liberté de mouvement de la tête d'ancrage est obtenue en prévoyant un moyen de liaison intermédiaire approprié dans l'adaptateur A.

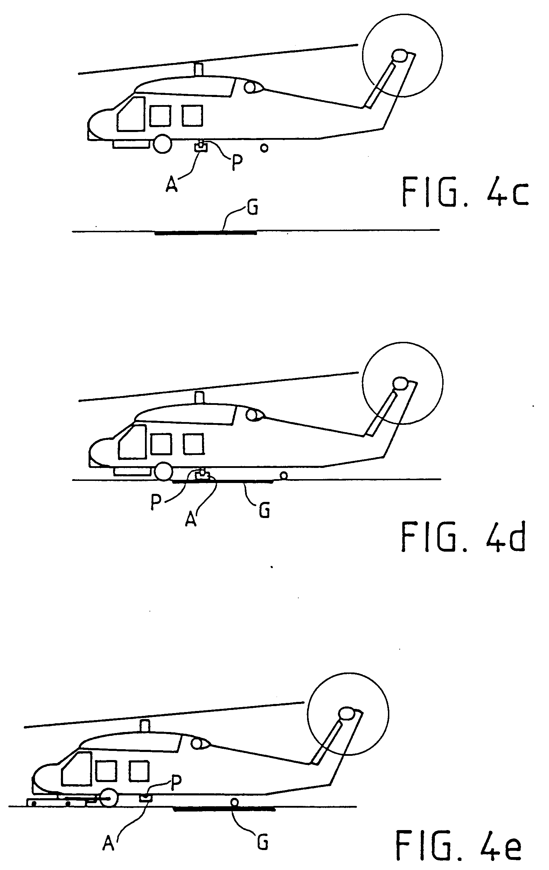

On va maintenant décrire la procédure d'utilisation de l'adaptateur A en se référant aux Figs. 4a à 4e. A la Fig. 4a, un hélicoptère est en vol stationnaire au-dessus d'une grille d'appontage G. Un adapteur A conforme à l'invention est placé à proximité immédiate de la grille. Le pilote commande le déploiement de la pièce P et le déroulement du câble messager M au moyen duquel l'adapteur A va être hissé, Fig. 4b, puis fixé automatiquement sous la pièce P, Fig. 4c, et verrouillé au moyen des crochets PC de cette dernière. L'extrémité du câble messager se déverrouille alors d'avec l'adaptateur. La pièce P est ensuite légèrement rétractée pour que l'hélicoptère puisse se poser sans que l'adaptateur n'entre en contact avec la grille G. Aussitôt que ses roues touchent le sol, la pièce P est déployée à nouveau complètement pour commander l'ancrage de la tête de l'adaptateur dans la grille, Fig. 4d. Pour déplacer l'hélicoptère à partir de la grille d'appontage, Fig. 4e, il suffit de déverrouiller la tête d'ancrage de l'adaptateur A d'avec la grille G, et de rentrer à nouveau la pièce P.

Pour un nouveau décollage, l'hélicoptère est dans la position de la Fig. 4d, la tête de l'adapteur A étant ancrée dans la grille G. Le pilote se dégage de l'adaptateur en libérant au moyen du verrou PV les crochets PC dans la pièce P. L'adapteur A reste verrouillé dans la grille G, mais se désolidarise de la pièce P qui s'en sépare. L'adaptateur A est ensuite retiré manuellement de la grille G, puis stocké.

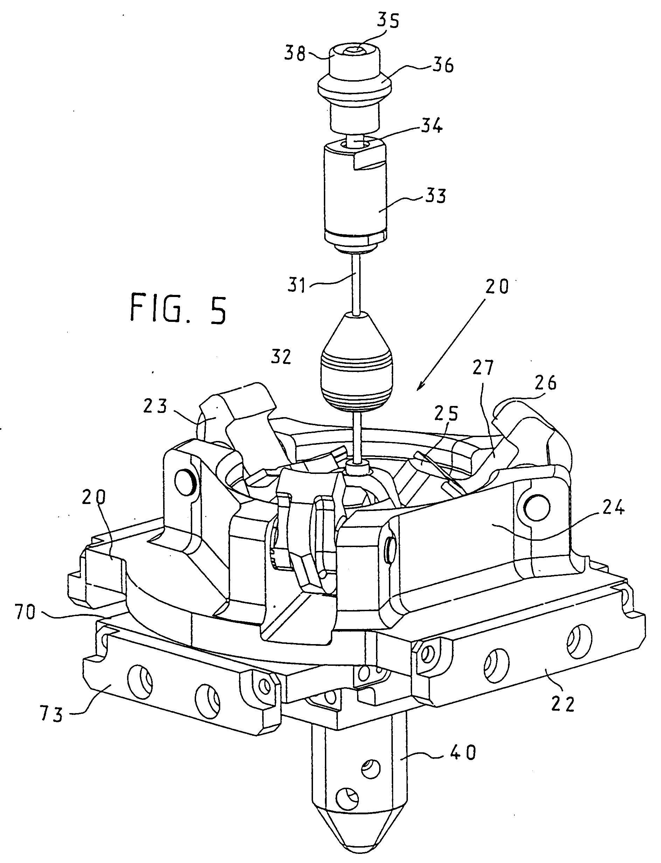

Dans la forme de réalisation des Figs. 5 et suivantes, l'adaptateur A selon l'invention comporte un plateau supérieur 20 sous lequel est fixée une tête d'ancrage 40 par l'intermédiaire d'une pièce de liaison 70 lui laissant une certaine liberté de mouvement en translation transversale par rapport à son axe.

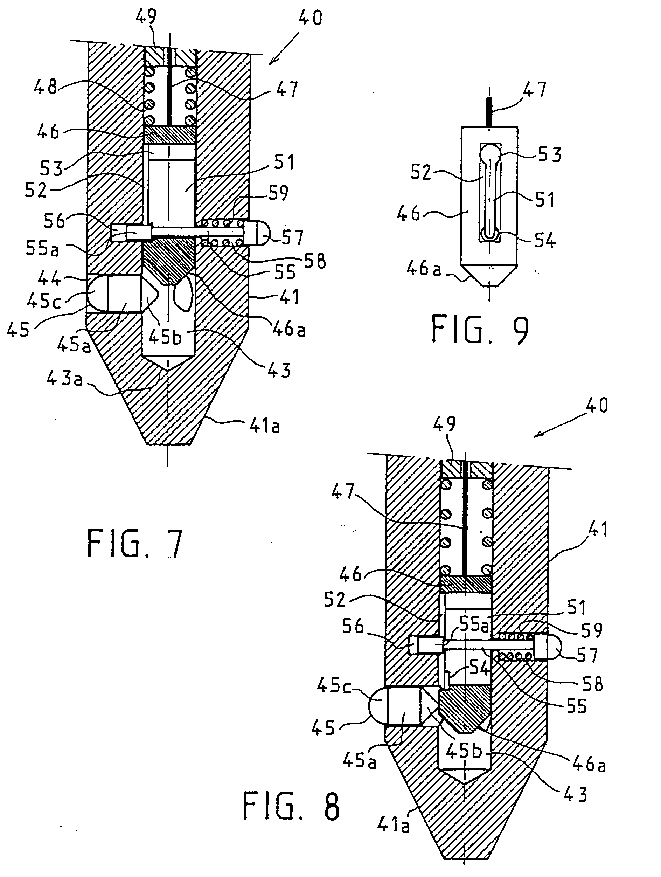

La tête d'ancrage 40 est du type décrit dans la demande de brevet français n° 2 701 689 déjà citée. Elle est représentée en détail aux Figs. 7 à 10.

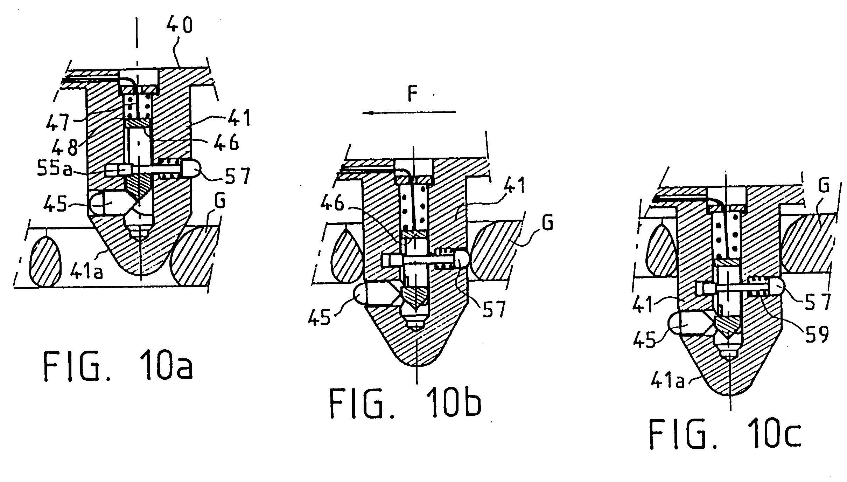

Elle se présente sous la forme d'une broche cylindrique 41, dont l'extrémité inférieure 41a est convexe, et de préférence conique, pour faciliter sa pénétration à travers les alvéoles d'une grille telle que G, Figs. 10a à 10c. Afin qu'elle puisse s'y engager même si son orientation n'est pas strictement normale à la grille, son diamètre est prévu légèrement inférieur au diamètre minimum des alvéoles.

Juste au-dessus de son extrémité conique 41a, la broche 41 comprend trois doigts 45 engagés dans des trous radiaux 44, lesquels débouchent dans un alésage axial 43, à une certaine distance au-dessus de l'extrémité inférieure 43a de cet alésage. Le corps des doigts 45 présente une partie médiane cylindrique 45a, une partie terminale interne 45b de forme conique et une partie terminale externe 45c de forme arrondie. Entre les parties 45a et 45b, un petit épaulement périphérique orienté vers l'extérieur permet l'emprisonnement de la partie médiane 45a à l'intérieur du trou 44, par formation d'un bourrelet intérieur le long du bord de celui-ci. Les doigts 45 sont susceptibles de coulisser dans les trous 44 entre une position rentrée, Fig. 7, pour laquelle l'extrémité externe 45c se trouve à l'intérieur du trou 44, l'extrémité interne 45b étant dans l'alésage 43 et une position sortie, Fig. 8, pour laquelle l'extrémité externe 45c fait saillie à la périphérie de la broche 41, l'extrémité interne 45b étant totalement à l'intérieur du trou 44.

Une tige interne 46 est montée coulissante dans l'alésage 43, dont la fonction est d'entraîner et maintenir les doigts 45 en position sortie. A cet effet, son extrémité inférieure 46a est de forme conique. En position haute, la tige 46 a son extrémité 46a au-dessus des extrémités internes 45b des doigts 45 qui peuvent donc pénétrer librement dans l'alésage 43. Lorsqu'elle descend, la tige 46 chasse les doigts 45 vers l'extérieur, et les maintient sortis par sa surface cylindrique venant obturer les trous 44.

La tige 46 est solidarisée à un câble de manoeuvre 47 sortant de la broche 41 à travers un bouchon 49 fermant l'alésage 43. Autour de la partie du câble 47 à l'intérieur de l'alésage, entre le bouchon 49 et le dessus de la tige 46, un ressort 48 force celle-ci vers le bas, soit vers sa position de verrouillage des doigts 45 en position sortie. Le câble 47 sert à remonter la tige 46 dans l'alésage 43. Par ailleurs, un moyen non montré limite sa course vers le bas.

La broche 41 comporte également un système de gâchette pour retenir la tige 46 en position haute dans l'alésage 43, contre l'effort du ressort 48, et la libérer en réponse à l'engagement dans un alvéole de grille, après que les trois doigts 45 ont dépassé vers le bas le plan du plus petit diamètre entre les isthmes délimitant cet alvéole.

Le système de gâchette comprend, d'une part, dans la tige 46, un trou 51 allongé longitudinalement et la traversant diamétralement, comme on peut le voir à la Fig. 9. D'un côté, autour du trou 51, la surface périphérique de la tige 46 présente un décrochement 52 sous la forme d'un méplat. Par ailleurs, le haut du trou 51 s'élargit en une partie cylindrique 53, tandis que sa base, du côté du méplat 52, présente un lamage 54.

Le système comprend d'autre part une tige transversale 55 passant à travers le trou 51. Du côté du décrochement 52, l'extrémité 55a de la tige 55 présente un épaulement circulaire s'appuyant sur le bord du trou 51, lequel épaulement est de diamètre légèrement inférieur à ceux du lamage 54 et de la partie cylindrique 53. L'extrémité 55a est engagée coulissante dans un trou borgne 56 ménagé à partir de l'alésage 43 dans le corps de la broche 41.

L'autre extrémité de la tige 55 est solidarisée avec un téton 57 engagé dans un trou 58 débouchant à la périphérie du corps de la broche 41. Le téton 57 comporte une partie interne cylindrique coulissant dans le trou 58 et une partie externe arrondie. Il est rappelé vers l'extérieur par un ressort 59 et constitue le déclencheur du système de gâchette.

La partie cylindrique 53 du trou 51 sert uniquement au montage du système, permettant de faire passer l'extrémité élargie 55a de la tige 55 à travers le trou 51.

On voit à la Fig. 7 que la tige 46 de verrouillage des doigts 45 est maintenue en position haute, à l'encontre du ressort 48, par engagement de l'extrémité 55a de la tige 55 dans le lamage 54. Le téton 57 sort alors du corps de la broche 41 d'une distance telle que la somme de cette distance et du diamètre de la broche 41 est supérieure au diamètre mimimum d'un alvéole.

Les Figs. 10a à 10c illustrent schématiquement le fonctionnement d'une telle tête d'ancrage. A la Fig. 10a, la broche 41 descend verticalement vers la grille G. La tige 46 est retenue en position haute par le système de gâchette, à l'encontre du ressort 48. Les doigts 45 sont en position escamotée à l'intérieur du corps de la broche.

Au contact de la grille G, la broche 41 est guidée par son extrémité 41a à l'intérieur d'un alvéole de la grille G, en se déplaçant transversalement par rapport à son axe, comme l'indique la flèche F, Fig. 10b. Alors que la broche 41 continue à descendre, ses doigts 45 passent au-dessous du niveau du plus petit diamètre de l'alvéole, avant que le téton 57 ne soit entré en contact avec la grille.

Quand ce contact a lieu, Fig. 10b, la tige 46 libérée descend par l'action du ressort 48, en chassant les doigts 45 vers l'extérieur. On notera que le système de sortie des doigts 45 est tel que s'ils sont bloqués lors du déclenchement du système de gâchette, il ne s'ensuit pas de conséquences néfastes pour les pièces du dispositif, la tige 46 restant simplement retenue par les extrémités internes 45b des doigts 45. Et, surtout, le verrouillage est quand même assuré dès que les doigts sont débloqués. Par contre, le verrouillage des doigts 45 est absolument sûr tant que la tige 46 reste en position de verrouillage.

La Fig. 10c illustre la phase où, la broche 41 ayant continué à descendre dans l'alvéole, le téton 57 n'est plus en contact avec la grille G. Alors, la tige 55 solidaire du téton 57 dans le système de gâchette est rappelée par le ressort 59, de sorte que l'épaulement de son extrémité 55a s'appuie sur le méplat de la tige 46 autour du trou 51, dans le décrochement 52. Les doigts 45 étant verrouillés en position sortie par la tige 46, la broche 41 est ancrée de façon stable dans la grille G. Si la broche 41 est remontée, les doigts 45 la retiennent emprisonnée dans l'alvéole en s'appuyant sous ses bords.

La tête d'ancrage qui vient d'être décrite est entièrement mécanique et ne requiert donc pour son fonctionnement aucun moyen extérieur. Son déverrouillage et son réarmement sont opérés par simple traction manuelle sur le câble 47.

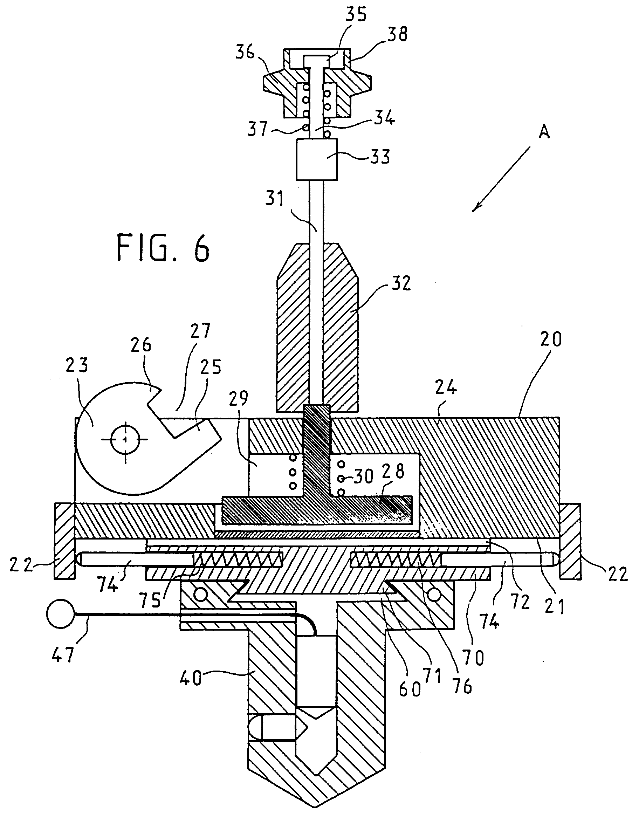

La tête d'ancrage 40 est fixée sous le plateau supérieur 20 au moyen d'une pièce intermédiaire 70, comme on peut le voir plus clairement qu'ailleurs à la Fig. 6. La pièce 70 est globalement une plaque rectangulaire avec, respectivement sur sa face inférieure et dans sa face supérieure, une partie mâle de glissière en saillie 71 et une partie femelle de glissière en creux 72, Fig. 6, lesquelles sont disposées orthogonalement en croix et ont une section en queue d'aronde. La partie de glissière mâle 71 est engagée dans une partie de glissière femelle complémentaire 60 prévue dans le sommet de la tête d'ancrage 40. De même, dans la partie de glissière femelle 72 de la face supérieure, est engagée une partie mâle complémentaire 21 prévue sous le plateau 20. Les déplacements relatifs entre la pièce intermédiaire 70 et le plateau 20 sont limités par des butées 22 solidaires de celui-ci. Des butées similaires 73, Fig. 5, montées sur la pièce intermédiaire 70, limitent les mouvements relatifs entre celle-ci et la tête d'ancrage 40.

Au surplus, des moyens de rappel assurent au repos le centrage de la pièce intermédiaire 70 sous le plateau 20, et le centrage de la tête d'ancrage 40 sous la pièce intermédiaire 70. Tels que représentés, ce sont des mêmes systèmes à doigts coopérant élastiquement avec les butées précitées. Considérant celui de la pièce 70, le seul qui est visible à la Fig. 6, on peut voir que les doigts 74, disposés

Le plateau 20 porte sur sa face supérieure les moyens réalisant l'accrochage de l'adaptateur A à la pièce P dite "probe" du système "RAST".

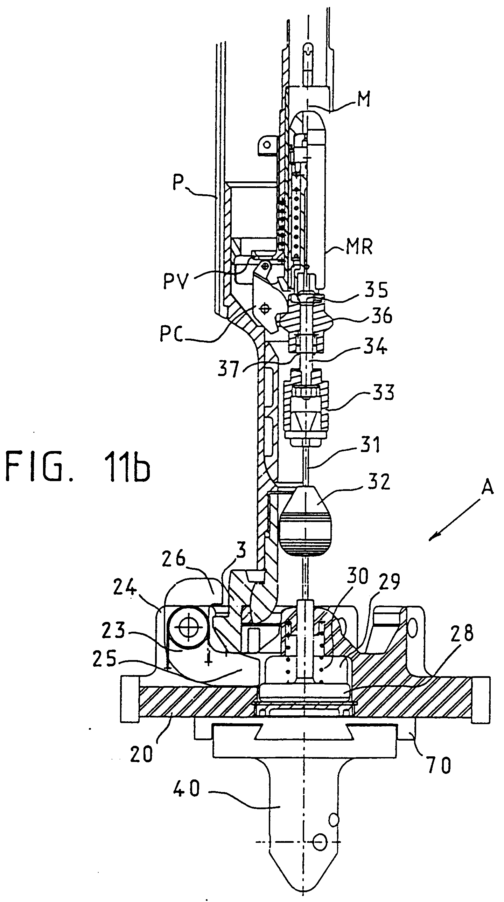

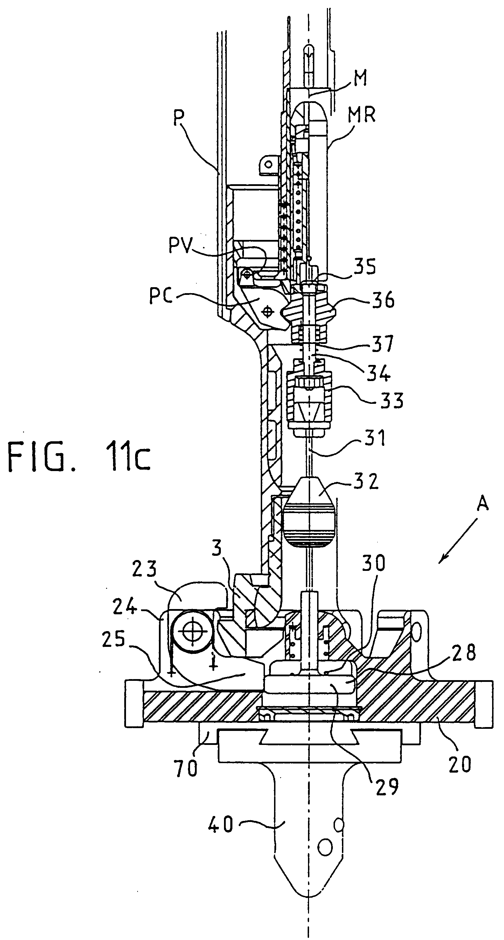

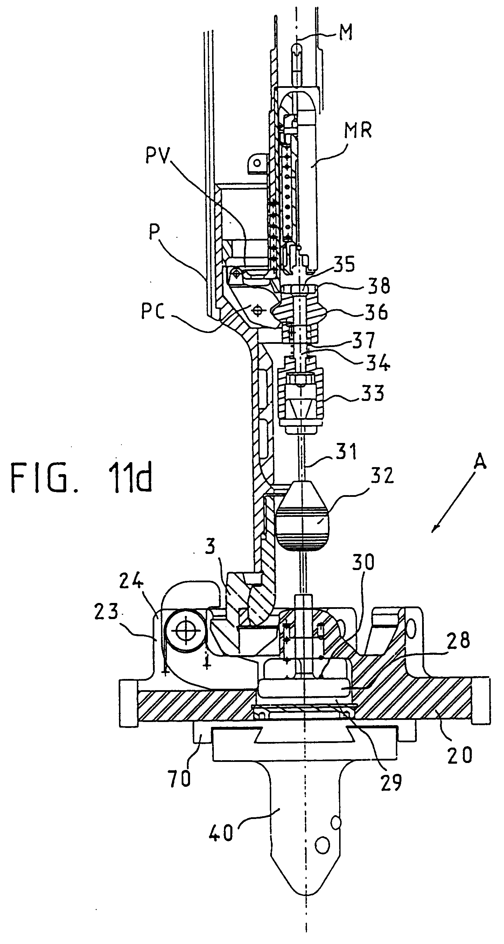

Ce sont tout d'abord trois crochets pivotants 23 répartis en cercle autour de son centre et destinés à saisir et maintenir la tête d'extrémité 3 de la pièce P. Ces crochets 23, en liaison mécanique avec l'extrémité inférieure du cylindre P, sont situés à l'extérieur de ce cylindre. Cette action externe des crochets 23 vis-à-vis du cylindre P présente l'avantage d'une transmission d'efforts importants entre la grille G et le cylindre P. A titre indicatif et nullement limitatif, des crochets ainsi positionnés peuvent avoir une capacité de tenue verticale avoisinant les 11 000 daN; la tenue de l'hélicoptère est donc parfaitement assurée. Comme le montre plus particulièrement la Fig.5, les crochets 23 sont intégrés et articulés autour d'axes horizontaux dans un rebord circulaire 24 de réception de la tête 3. Les crochets 23 comportent un talon inférieur ou dent 25 dirigé vers le centre, délimitant avec une dent supérieure moins longue 26 un creux ou échancrure 27. Les crochets étant rappelés en position d'ouverture par des ressorts, quand la tête 3 est admise dans le rebord 24 du plateau 20, elle rencontre les talons 25, et en les entraînant vers le bas, fait pivoter les crochets 23 qui se referment sur elle. Par blocage des crochets 23 dans cette position, le plateau 20 est alors solidement assujetti sous la pièce P. Ce blocage est assuré au moyen du verrou 28 qui se trouve au centre du plateau 20. Le verrou 28 est mobile axialement dans un alésage 29, rappelé vers le bas par un ressort 30. L'alésage 29 est fermé à son extrémité inférieure pour empêcher que le verrou 28 n'appuie contre le fond de la glissière 72 de la pièce intermédiaire 70. Le verrou 28 coopère par son côté avec l'extrémité du talon 25 des crochets 23. On voit à la Fig.6 et aux Figs 11 qu'il suffit qu'il soit légèrement relevé dans l'alésage 29 pour que les crochets 23 soient parfaitement verrouillés.

Le verrou 28 est commandé par un câble 31 fixé au centre de son extrémité supérieure, et qui se trouve donc implanté au centre du plateau 20. A proximité immédiate de ce dernier, le câble 31 porte en son centre, et qui se trouve par conséquent implanté au centre du plateau 20. A proximité immédiate de ce dernier, le câble 31 porte concentriquement un guide cylindrique 32, de préférence en matériau déformable, dont l'extrémité supérieure est convexe. Le guide 32 est destiné à faciliter l'entrée du câble 31 dans la pièce P comme on le verra dans la suite, ainsi qu'à le rigidifier tout en lui conservant une certaine souplesse.

L'extrémité du câble 31 aboutit à un bloc 33 permettant de régler sa longueur, au moyen par exemple d'un système vis-écrou-contre-écrou. Le bloc 33 sert également à la liaison entre le câble 31 et une petite tige 34 le prolongeant vers le haut, qui se termine par le renflement 35, lequel a été mentionné précédemment, ainsi que l'anneau 36, à propos de la Fig. 3. L'anneau 36 est monté coulissant sur la tige 34, maintenu contre le renflement 35 par un ressort 37, Fig. 6. Par ailleurs, l'anneau 36 comporte un rebord périphérique supérieur 38 délimitant une gorge annulaire autour du renflement 35. Cette gorge est destinée à recevoir l'extrémité inférieure des mors de la pince 10 du raccord MR du câble messager M, pour assurer une connexion sûre comme on le verra dans la suite.

Les Figs. 11a à 11d illustrent la façon dont l'adaptateur A qui vient d'être décrit se fixe en place sur la pièce P du système "RAST". Dans ces dessins de principe, la pièce P n'est représentée que partiellement en demi-coupe axiale, de même qu'il n'apparaît qu'un seul crochet 23 sur le plateau 20.

En premier lieu, l'adaptateur A est relié au câble messager M en accrochant le renflement 35 à l'extrémité supérieure du câble 31 dans la pince 10 du raccord MR. Pour ce faire, le renflement 35 doit être dégagé au-delà du rebord 38 de l'anneau 36, en abaissant manuellement ce dernier le long de la tige 34, vers le bloc 33. Une fois la connexion effectuée, l'anneau 36 remonte et vient emprisonner le bas des mors de la pince 10 qui ne peut donc plus s'ouvrir, même si le ressort 11 du raccord MR est fortement sollicité.

L'adaptateur A est ainsi hissé vers la pièce P par réenroulement du câble messager M, comme illustré à la Fig. 11a. La réaction du poids de l'adaptateur A s'exerçant sur le verrou 28, le ressort 30 le rappelant vers le bas devra être prévu suffisamment fort pour résister sans se comprimer. Après pénétration du raccord MR du câble messager à l'intérieur de la pièce P, celle du guide 32 assure le centrage de l'adaptateur A qui sera nécessaire pour que la tête d'extrémité 3 de la pièce P rentre bien à l'intérieur du rebord périphérique 24 et des crochets 23 du plateau 20.

A la Fig. 11b, le rebord 24 du plateau 20 est venu se placer autour de la tête d'extrémité 3 de la pièce P. La tête 3 rencontrant concomitamment les talons 25 des crochets 23 fait pivoter ces derniers, de sorte qu'ils se sont refermés sur elle, les dents supérieures 26 passant au-dessus de son épaulement périphérique. Le verrou 28 étant toujours en position basse, les crochets 23 ne sont pas verrouillés. A l'intérieur de la pièce P, le pourtour de l'anneau 36 arrive juste au contact de la dent supérieure 5 des crochets PC, lesquels sont en position d'ouverture. On voit par cette figure que la longueur du câble 31 doit être déterminée de façon très précise, ce que permet le bloc de réglage 33.

Le connecteur MR continuant sa progression vers le haut dans la pièce P alors que le plateau 20 ne peut plus monter du fait que la tête 3 est en appui contre les talons 25 des crochets 23 et que ceux-ci sont au bout de leur course de pivotement, le verrou 28 est entraîné vers le haut et bloque donc les crochets 23 en position de fermeture, Fig. 11c. En même temps, l'anneau 36 entraîne les crochets PC de la pièce P en fermeture, du fait que le ressort 37 est plus fort que l'ensemble des ressorts de rappel en ouverture des crochets PC. Ceux-ci se retrouvent alors bloqués en fermeture par le verrou PV, comme on le voit plus clairement à la Fig. 3.

A partir de cet état, le verrouillage de l'adaptateur A sur la pièce P est donc assuré par les crochets PC de la pièce P qui, par l'intermédiaire de l'anneau 36 et du câble 31 retiennent le verrou 28 en position de blocage des crochets 23. L'adaptateur A peut donc être décroché du câble messager M, et c'est précisément ce qui va se passer maintenant, Fig. 11d. En effet, s'il ne peut plus descendre du fait d'être saisi par les crochets PC, l'anneau 36 ne peut plus monter non plus. Par conséquent, le raccord MR en continuant à monter fait sortir le renflement 35 au-delà du rebord 38 de l'anneau 36, de sorte que les mors de la pince 10 ne sont plus contraints par le rebord 38 et s'ouvrent, le ressort 11 étant suffisamment contracté. Le renflement 35 libéré redescend dans le sommet de l'anneau 36 et de même, le verrou 28 redescend légèrement dans son alésage 29, mais en maintenant le blocage des crochets 23. L'adaptateur est dès lors opérationnel pour une procédure d'appontage telle que décrite précédemment, en référence aux Figs. 4a à 4e.

Pour libérer l'hélicoptère de l'adaptateur A, le pilote n'aura qu'à actionner la commande du verrou PV de la pièce P du système "RAST" par lequel les crochets PC sont libérés, et par suite le verrou 28 et les crochets 23 sur l'adaptateur A. L'équipement "RAST" de l'hélicoptère est alors en état d'être utilisé à nouveau directement, c'est-à-dire sans aucune action spéciale de la part du pilote.

Pour conclure, on soulignera la souplesse et la facilité d'utilisation de l'adaptateur selon l'invention, ainsi que son grand intérêt d'un point de vue économique, étant donné qu'un seul est suffisant pour équiper une grille d'appontage, quel que soit le nombre d'hélicoptères à bord.

## Revendications

1. Dispositif adaptateur pour hélicoptère équipé avec un système dit "RAST", lui permettant d'utiliser au sol un système à grille,
le système "RAST" comportant à bord de l'hélicoptère un cylindre télescopique (P) dit "probe", pourvu intérieurement de crochets (PC) de verrouillage de l'extrémité d'un câble dit "RA" situé au sol, et un câble messager (M) avec, à son extrémité libre, un raccord d'extrémité (MR) comportant un boîtier (9) à l'intérieur duquel se trouve une pince (10) munie de deux mors, ledit raccord d'extrémité étant apte à être raccroché à l'extrémité du câble "RA" et à être descendu et remonté à travers ledit cylindre (P),
dispositif comprenant une tête inférieure d'ancrage (40), apte à s'ancrer automatiquement dans une grille (G),
un support (20) sous lequel est montée la tête d'ancrage (40) et un premier moyen (31,35) sur le support (20) connectable au raccord (MR) du câble messager (M), caractérisé en ce qu'il comprend des crochets (23) sur le support (20) et agissant à l'extérieur du cylindre (P), pour assujettir automatiquement ce support (20) à l'extrémité inférieure du cylindre (P) lorsqu'il est amené contre elle par l'intermédiaire du câble messager (M), et des moyens (28,36) coopérant avec les crochets (PC) du cylindre (P) pour verrouiller les crochets (23) du support dans cet état d'assujettissement, dont la libération est commandable à bord de l'hélicoptère,
le dispositif étant prévu pour être présent au sol à proximité d'une grille (G), et transmis à l'hélicoptère et monté automatiquement sous l'extrémité du cylindre (P) au moyen du câble messager (M).

2. Dispositif selon la revendication 1, caractérisé en ce que sa tête (40) pour l'ancrage dans une grille (G) consiste en une broche cylindrique (41) à extrémité convexe, comportant près de cette extrémité convexe des doigts (45) orientés et mobiles radialement entre une position escamotée à l'intérieur de la broche (41) et une position sortie,
des moyens pour entraîner et retenir en position les doigts (45), ces moyens agissant à partir d'un état armé en réponse à la pénétration de la broche (41) dans un alvéole de la grille (G), après que les doigts (45) sont parvenus sous le niveau du plus petit diamètre de cet alvéole,
et des moyens pour déverrouiller les doigts (45) et réarmer lesdits moyens d'entraînement et de retenue.

3. Dispositif selon la revendication 2, caractérisé en ce que l'armement des moyens d'entraînement et de retenue en position sortie des doigts (45) est assuré par un système de gâchette, lequel est libéré par un téton (57) situé au-dessus des doigts (45) et sensible au passage dans un alvéole de la grille (G).

4. Dispositif selon la revendication 3, caractérisé en ce que ledit système à gâchette comporte un câble (47) de réarmement manuel.

5. Dispositif selon l'une des revendications 2 à 4, caractérisé en ce qu'il comporte en outre une pièce de liaison (70) entre le support (20) et la tête d'ancrage (40), pour donner à cette dernière une certaine liberté de mouvement en translation transversale par rapport à son axe.

6. Dispositif selon la revendication 5, caractérisé en ce que la pièce (70) est réunie au support (20) d'une part, et à la tête d'ancrage (40), d'autre part, par deux moyens à glissières, (21,72) et (60,71) respectivement, lesquels sont disposés perpendiculairement, et en ce que des moyens de rappel (74,75,76) sont prévus pour assurer au repos le centrage de la pièce intermédiaire (70) sous le support (20), et le centrage de la tête d'ancrage (40) sous la pièce intermédiaire (70).

7. Dispositif selon l'une des revendications 1 à 6, caractérisé en ce que le support (20) est un plateau dont la face supérieure comporte les crochets (23) pivotants, répartis en cercle autour de son centre, et destinés à saisir et retenir la tête d'extrémité (3) de la pièce (P), un verrou central (28) étant prévu pour maintenir les crochets (23) en position fermée, lequel est actionné par un câble central (31) sortant vers le haut, dont l'extrémité supérieure est pourvue d'un renflement (35) constituant ledit moyen connectable au raccord (MR) du câble messager (M) et, en dessous du renflement (35), un anneau (36) coopérant avec les crochets (PC) à l'intérieur de la pièce (P) pour retenir le verrou (28) en position de blocage à l'état fermé des crochets (23), l'anneau (36) étant coulissant et rappelé contre le renflement (35) par un ressort (37), et comportant par ailleurs un rebord périphérique supérieur (38), lequel délimite autour du renflement (35) une gorge destinée à recevoir et à contraindre les mors de la pince (10) du raccord (MR) du câble messager (M), pour assurer la connexion avec ce dernier tant que l'anneau (36) n'est pas prisonnier des crochets du cylindre (PC).

8. Dispositif selon la revendication 7, caractérisé en ce que sur le plateau (20), les crochets (23) sont intégrés dans un rebord circulaire (24) de réception de la tête (3) de la pièce (P).

9. Dispositif selon la revendication 5 ou 6, caractérisé en ce que le câble (31) porte en outre un moyen (33) permettant en outre le réglage de sa longueur.

10. Dispositif selon l'une des revendications 7 à 9, caractérisé en ce que le câble (31) porte également, à proximité du plateau (20), un guide (32) facilitant son introduction dans la pièce (P) et le centrage sous celle-ci du plateau (20).

## Claims

1. Adapter system for helicopter equipped with a system known as "RAST", allowing the aircraft to use a grid system on the ground;
the "RAST" system comprising, on board the helicopter, a telescopic cylinder (P) called the "probe", the inside of which is fitted with catches (PC) to lock the end of a cable known as "RA" located on the ground, and a messenger cable (M) with, on its free end, an end coupling (MR) comprising a housing containing a two-jaw clamp (10), said end coupling capable of being attached to the end of the "RA" cable and being lowered and raised through the said probe (P);
system comprising a lower anchoring head (40) capable of automatically engaging in a grid (G);
a support (20) under which are fitted the anchoring head (40) and a first device (31, 35) on the support (20) that is connectable with the coupling (MR) on the messenger cable (M), this system being characterized by the fact that it is fitted with catches (23) on the support (20) which act on the outside of the probe (P) when it is brought into contact with them by means of the messenger cable (M), and devices (28, 36) working together with the catches (PC) on the probe (P) to lock the catches (23) on the support in this constrained state which can be released from on board the helicopter;
the system being designed to be located on the ground near the grid (G) and carried to the helicopter and automatically fitted under the end of the probe by means of the messenger cable (M).

2. System as per Claim 1, characterized in that its head (40) allowing anchorage in a grid (G) consists of a cylindrical pin (41) with a convex end and fitted with fingers (45) near that convex end, the fingers being oriented and mobile in the radial direction between the retracted position inside the pin (41) and an extended position;
devices actuating the fingers (45) and holding them in position, these devices acting from the armed state in response to penetration of the pin (41) into an opening in the grid (G) when the fingers (45) reach a position below the level of the smallest diameter of that opening,
and devices for unlocking the fingers (45) and rearming the said actuating and holding devices.

3. System as per Claim 2, characterized in that arming of the devices actuating the fingers (45) and holding them in the extended position is ensured by a trigger system released by means of a nipple (57) located above the fingers (45) and sensitive to penetration into an opening in the grid (G).

4. System as per Claim 3, characterized in that the said trigger system comprises a manual rearming cable (47).

5. System as per one of the Claims numbered 2 to 4, characterized in that it also comprises a link part (70) between the support (20) and the anchoring head (40) in order to give the anchoring head a certain freedom of movement in transverse translation with respect to its centreline.

6. System as per Claim 5, characterized in that the linking part (70) is joined to the support (20) on one side and on the anchoring head (40) on the other by two sliding devices (21, 72) and (60, 67) respectively, with these devices arranged perpendicularly, and in that spring return devices (74, 75, 76) are provided to ensure that the anchoring head (40) is centred under the intermediate part (70) when at rest.

7. System as per one of the Claims numbered 1 to 6, characterized in that the support (20) is a plate the upper face of which is fitted with swivelling catches (23) arranged in a circle around its centre and designed to catch and secure the head (3) at the end of the part (P), with a central lock (28) being provided to maintain the catches (23) in the closed position, that lock being actuated by a central cable (31) extending upwards, the end of the cable being fitted with a bulge end (35) which constitutes the said device for connection with the coupling (MR) on the messenger cable (M) and, below the bulge end (35), a ring (36) working together with the catches (PC) inside the part (P) to secure the lock (28) in the locking position with the catches (23) in the closed state, the ring (36) being a sliding device that is pushed against the bulge end (35) by a spring (37), also comprising an upper peripheral flange (38) forming a groove around the bulge end (35), that groove being designed to engage and constrain the clamp jaws (10) of the coupling (MR) on the messenger cable (M) to ensure connection with the latter when the ring (36) is not held by the catches on the probe (PC).

8. System as per Claim 7, characterized in that, on the plate (20), the catches are integrated in a circular flange (24) into which the head (3) of the part (P) fits.

9. System as per Claim 5 or 6, characterized in that the cable (31) is also fitted with a device (33) allowing its length to be adjusted.

10. System as per one of the Claims numbered 7 to 9, characterized in that the cable (31) is also fitted with a guide (32), near the plate (20), so facilitating insertion of the cable into the part (P) and centring under the plate part (20).

## Patentansprüche

1. Adaptervorrichtung für mit dem sogenannten System « RAST » ausgerüstete Hubschrauber, die ihm ermöglicht, auf dem Boden ein Gittersystem zu verwenden,
wobei das System « RAST » an Bord des Hubschraubers einen teleskopischen Zylinder (P) « probe » umfasst, in dem Verriegelungshaken (PC) des Endes eines auf dem Boden befindlichen « RA-Seils » angeordnet sind, und ein Botenseil (M) mit an seinem freien Ende einem Endverbindungsstück (MR), bestehend aus einem Kasten (9), in dem sich eine Zange (10) mit zwei Spannbacken befindet, wobei das besagte Endverbindungsstück geeignet ist, um in das Ende des « RA-Seils » eingehakt und durch den besagten Zylinder (P) angehoben und abgesenkt zu werden,
Vorrichtung mit einem unteren Verankerungskopf (40), der sich automatisch in einem Gitter (G) verankern kann,
einem Träger (20), unter dem der Verankerungskopf (40) montiert ist, und
einem ersten Mittel (31, 35) auf dem Träger (20), das an das Endverbindungsstück (MR) des Botenseils (M) angeschlossen werden kann, dadurch gekennzeichnet, dass es auf dem Träger (20) angeordnete und ausserhalb des Zylinders (P) wirkende Haken (23) umfasst, um diesen Träger (20) automatisch mit dem unteren Ende des Zylinders (P) zu verbinden, wenn er anhand des Botenseils (M) gegen es gedrückt wird, sowie mit den Haken (PC) des Zylinders (P) zusammenwirkende Mittel (28, 36) zum Verriegeln der Haken (23) des Trägers in diesem Verbindungszustand, deren Freisetzung an Bord des Hubschraubers ausgelöst werden kann,
wobei die Vorrichtung dazu vorgesehen ist, auf dem Boden in der Nähe des Gitters (G) vorhanden zu sein, an den Hubschrauber übertragen und automatisch mit dem Botenkabel (M) unter das Zylinderende (P) gehoben zu werden.

2. Vorrichtung nach Anspruch 1, dadurch gekennzeichnet, dass ihr Kopf (40) zur Verankerung in einem Gitter (G) eine zylindrische Spindel (41) mit konvexem Ende ist, mit in der Nähe dieses Endes angeordneten orientierten und radial zwischen einer eingezogenen Stellung innerhalb der Spindel (41) und einer ausgezogenen Stellung beweglichen Fingern (45),
Mittel zum Mitnehmen und Zurückhalten der Finger (45) in ausgezogener Stellung, wobei diese Mittel ab einem geladenen Zustand wirken, nachdem die Spindel (41) in eine Wabe des Gitters (G) eingedrungen ist und die Finger (45) das Niveau des kleinsten Durchmessers dieser Wabe erreicht haben,
und Mittel zur Entriegelung der Finger (45) und Zurücksetzung der besagten Mitnahme- und Rückhaltmittel.

3. Vorrichtung nach Anspruch 2, dadurch gekennzeichnet, dass die Zurücksetzung der Mitnahme- und Rückhaltmittel in ausgefahrener Stellung der Figner (45) von einem Drückersystem gewährleistet wird, das von einem Ansatz (57) freigesetzt wird, der sich über den Fingern (45) befindet und auf die Passage in einer Wabe des Gitters (G) anspricht.

4. Vorrichtung nach Anspruch 3, dadurch gekennzeichnet, dass das besagte Drückersystem ein manuelles Rückzugseil (47) umfasst.

5. Vorrichtung nach einem der Ansprüche 2 bis 4, dadurch gekennzeichnet, dass sie ausserdem ein Verbindungsteil (70) zwischen dem Träger (20) und dem Verankerungskopf (40) aufweist, um letzterem eine gewisse Bewegungsfreiheit in Quertranslation in bezug auf seine Achse zu verschaffen.

6. Vorrichtung nach Anspruch 5, dadurch gekennzeichnet, dass das Teil (70) einerseits mit dem Träger (20) und andererseits mit dem Verankerungskopf (40) verbunden ist, und zwar mit jeweils zwei senkrecht angeordneten Gleitmitteln (21, 72) und (60, 71), und dass die Rückstellmittel (74, 75, 76) dazu vorgesehen sind, in Ruhestellung die Zentrierung des Zwischenteils (70) unter dem Träger (20) und die Zentrierung des Verankerungskopfs (40) unter dem Zwischenteil (70) zu gewährleisten.

7. Vorrichtung nach einem der Ansprüche 1 bis 6, dadurch gekennzeichnet, dass der Träger (20) aus einer Platte besteht, deren Oberfläche drehbare Haken (23) aufweist, die kreisförmig um ihre Mitte herum angeordnet sind und den Endkopf (3) des Teils (P) erfassen und festhalten sollen, während ein mittlerer Riegel (28) dazu vorgesehen ist, die Haken (23) in geschlossener Stellung zu halten, und der von einem mittleren, nach oben herausgeführten Seil (31) betätigt wird, dessen oberes Ende eine Wulst (35) aufweist, die das besagte am Verbindungsstück (MR) des Botenkabels (M) anschliessbare Mittel darstellt, und unter der Wulst (35) einen Ring (36), der mit den Haken (PC) innerhalb des Teils (P) zusammenwirkt, um den Riegel (28) in blockierter Stellung bei geschlossenem Zustand der Haken (23) festzuhalten, wobei der Ring (36) gleitend ist und von einer Feder (37) gegen die Wulst (35) zurückgeholt wird, und mit ausserdem einem oberen periphären Rand (38), der um die Wulst (35) herum einen Hals abgrenzt, der die Backen der Zange (10) des Verbindungsteils (MR) des Botenkabels (M) aufnehmen und zusammendrücken soll, um die Verbindung mit letzterem zu gewährleisten, solange der Ring (36) nicht in den Haken des Zylinders (PC) eingeschlossen ist.

8. Vorrichtung nach Anspruch 7, dadurch gekennzeichnet, dass auf der Platte (20) die Haken (23) in einem umlaufenden Rand (24) für die Aufnahme des Kopfs (3) des Teils (P) integriert sind.

9. Vorrichtung nach Anspruch 5 oder 6, dadurch gekennzeichnet, dass das Seil (31) ausserdem ein Mittel (33) aufweist, das u.a. seine Längeneinstellung ermöglicht.

10. Vorrichtung nach einem der Ansprüche 7 bis 9, dadurch gekennzeichnet, dass das Seil (31) ebenfalls in der Nähe der Platte (20) eine Führung (32) aufweist, die ihre Einführung in das Teil (P) und die Zentrierung der Platte (20) unter diesem Teil erleichtert.
